# EUROPÄISCHE PATENTSCHRIFT

(11) **EP 0 711 508 B1**
(45) Veröffentlichungstag und Bekanntmachung des Hinweises auf die Patenterteilung: **12.07.2000**
(21) Anmeldenummer: 95117866.4
(22) Anmeldetag: 13.11.1995
(51) Int. Cl.: A23L 1/221, B01D 11/02

(54) **Verfahren zur Extraktion von natürlichen Aromen aus fett- und ölhaltigen Naturstoffen**
Process for extracting natural aromas from fat and oleaginous natural products
Procédé d'extraction d'arômes naturels à partir de produits naturels de graisse et oléagineaux

(30) Priorität: 14.11.1994 DE 4440644
(43) Veröffentlichungstag der Anmeldung: 15.05.1996
(73) Patentinhaber: SKW Trostberg Aktiengesellschaft, 83308 Trostberg (DE)
(72) Erfinder: Heidlas, Jürgen, Dr., D-83308 Trostberg (DE); Kahleyss, Ralf, Dr., D-83368 St. Georgen (DE); Simon, Andrea, D-83339 Chieming (DE)
(74) Vertreter: Huber, Bernhard, Dipl.-Chem.

(56) Entgegenhaltungen:
- EP-A- 0 065 106
- FR-A- 2 632 826
- DATABASE WPI Section Ch, Week 9238 Derwent Publications Ltd., London, GB; Class D13, AN 92-311149 & JP-A-04 214 799 ( HASEGAWA CO LTD) , 5.August 1992
- DATABASE WPI Section Ch, Week 9522 Derwent Publications Ltd., London, GB; Class D13, AN 95-166484 & JP-A-07 088 303 ( LION CORP) , 4.April 1995
- DATABASE WPI Section Ch, Week 9516 Derwent Publications Ltd., London, GB; Class B04, AN 95-121513 & RU-C-2 018 236 ( CANNING FRUITS DRYING IND RES INST) , 30.August 1994

## Beschreibung

Die moderne Lebensmitteltechnologie bedient sich vielfältiger Verfahren zur Bearbeitung von Lebensmitteln, um dem Verbraucher zeitgemäße und den geänderten Ernährungsgewohnheiten entsprechende Produkte anbieten zu können. Bei einigen Verfahrensschritten wird das ursprüngliche Aroma der Ausgangsstoffe aber technologisch verändert und auch oftmals negativ beeinflußt, weil insbesondere die wertgebenden Aromastoffe entfernt oder zerstört werden. Da jedoch gerade die Sensorik der Produkte ein entscheidendes Qualitätskriterium darstellt, ist die Lebensmitteltechnologie bestrebt, diese verfahrenstechnisch bedingte Beeinträchtigung der Produkte durch den gezielten Zusatz von Aromastoffen auszugleichen. Durch das zunehmende kritische Verbraucherdenken wird hierfür vor allem natürlichen Aromastoffen, die aus natürlichen Quellen gewonnen werden, der Vorzug vor naturidentischen oder gar künstlichen Aromastoffen gegeben.

Aus technologischer Sicht erweist sich die Gewinnung von Aromen aus Naturstoffen allerdings oftmals als sehr problematisch, weil zum einen der eigentliche, typische Sinneseindruck durch das Zusammenwirken einer Vielzahl von Einzelverbindungen bestimmt wird, zum anderen aber viele Aromakomponenten Verbindungen sind, die prozeßtechnisch bedingt, insbesondere durch eine thermische Belastung, zerstört oder aufgrund ihrer hohen Flüchtigkeit ungewollt entfernt werden. Diese Problematik ist insbesondere bei der Gewinnung von Aromen aus fett- oder ölhaltigen Naturstoffen sehr ausgeprägt. Zusätzlich wird bei einem Teil dieser Rohstoffe angestrebt Aromafraktionen zu gewinnen, die möglichst wenig Fett- und/oder Ölanteile enthalten, wie es insbesondere für die Herstellung von zum Teil wasserlöslichen Instant-Zubereitungen, wie z.B. Instant-Kaffee oder Produkten mit einem reduzierten Fett-/Ölgehalt, sogenannten "Light-Produkten", unabdingbare Voraussetzungen ist.

Zur Gewinnung von Aromen aus fett- und ölhaltigen Naturstoffen sind verschiedene Verfahren bekannt. Neben den destillativen Verfahren, wie z.B. fraktionierte Destillation oder Wasserdampfdestillation, werden auch konventionelle Lösemittelverfahren angewandt. In jüngster Zeit wurden Verfahren beschrieben, bei denen die Extraktion der Aromastoffe mit verdichteten Gasen, insbesondere mit überkritischem Kohlendioxid, durchgeführt wird. Beispielhaft wird in der europäischen Patentschrift EP 0 065 106 ein Verfahren zur Herstellung von konzentrierten Geruchs- und Geschmacksstoffextrakten durch Extraktion mit Kohlendioxid bei überkritischem Druck und unterkritischer Temperatur beschrieben. Derartige Verfahren sind gegenwärtig insbesondere aufgrund ihrer schonenden Prozeßbedingungen und der hohen Selektivität des Solvens von großem Interesse, da mit ihrer Hilfe qualitativ sehr hochwertige Aromen hergestellt werden können.

Dabei können zur Abtrennung einer Fett-/Ölfraktion von einer Aromafraktion mit verdichtetem CO₂ verschiedene Verfahrenswege beschritten werden: (i) die fraktionierte Extraktion, bei der die unterschiedlichen Inhaltsstoffe sequentiell durch unterschiedliche Verfahrensparameter wie Druck, Temperatur oder Schleppmitteleinspeisung aus dem Naturstoff extrahiert und getrennt gesammelt werden; (ii) die fraktionierte Abscheidung, bei der die verschiedenen Inhaltsstoffe zwar zunächst gemeinsam extrahiert, aber dann unter verschiedenen Bedingungen aus dem CO₂ abgeschieden werden.

Wie die Erfahrung zeigt, sind beide Verfahrensweisen jedoch oftmals mit Nachteilen behaftet: So gelingt es bei der fraktionierten Extraktion mit verdichtetem Kohlendioxid oftmals nicht, effektiv die Fette bzw. Öle von den Aromastoffen getrennt zu extrahieren, da beide Substanzklassen unter gleichen Bedingungen eine gute Löslichkeit im Kohlendioxid zeigen. Auch bei der fraktionierten Abscheidung gilt, daß eine wirksame Abtrennung der Aromastoffe von Fett und Öl oft nur schlecht durchgeführt werden kann, weil sich die Löslichkeitsverhalten der beiden Substanzklassen in verdichtetem Kohlendioxid zu wenig unterscheiden. Zwar sind durch zusätzliche verfahrenstechnische Maßnahmen, wie z.B. das Vorlegen von Hilfsstoffen in den Extraktabscheider, Verbesserungen zu erzielen, aber man erreicht oftmals keine befriedigende Anreicherung der Aromabestandteile, da diese immer noch in beträchtlichem Maße in einer lipophilen Matrix vorliegen. Eine Herstellung von Aromen mit einem niedrigen Fett- und/oder Ölgehalt, die insbesondere für die Aromatisierung von Instant-Getränken oder Light-Produkten geeignet sind, ist deshalb mit derart gewonnenen Aromafraktionen oftmals nur sehr unzureichend möglich.

Eine Aufgabe der vorliegenden Erfindung ist es daher, ein Verfahren zur Extraktion von natürlichen Aromen aus fett- und ölhaltigen Naturstoffen mit Hilfe von verdichteten Gasen zu schaffen, mit dem es möglich ist, sensorisch hochwertige Aromafraktionen zu gewinnen, die möglichst wenig Fett bzw. Öl enthalten. Eine weitere Aufgabe besteht darin, derartige Extrakte herzustellen, die eine deutlich verbesserte Löslichkeit in wäßrigen Medien aufweisen.

Diese Aufgabe wird erfindungsgemäß dadurch gelöst, daß man die Naturstoffe zweistufig extrahiert, wobei in der ersten Stufe flüssiges Propan und/oder Butan bei einer Temperatur ≤ 70°C und einem Druck < 500 x 10⁵ Pa (500 bar) und in der anschließenden zweiten Stufe verdichtetes Kohlendioxid bei einer Temperatur ≤ 50°C und Drücken zwischen 70 x 10⁵ Pa und 500 x 10⁵ Pa (70 und 500 bar) als Extraktionsmittel eingesetzt werden.

Es hat sich bei dieser Vorgehensweise überraschend gezeigt, daß in der ersten Stufe die Fette/Öle selektiv mit flüssigem Propan und/oder Butan entfernt werden, während der überwiegende Teil der Aromastoffe im Ausgangsstoff zurückbleibt. Diese Aromafraktion wird anschließend in der zweiten Extraktionsstufe mit verdichtetem Kohlendioxid extrahiert. Als aromahaltige Naturstoffe, die besonders für das Verfahren der Erfindung geeignet sind, können beispielhaft Kaffee, Kakao, Kokos und Erdnüsse genannt werden. Es eignen sich aber auch alle anderen sowohl fett- und öl- als auch aromahaltige Naturstoffe. Unter Berücksichtigung der Temperaturempfindlichkeit vieler Naturstoffe werden die verdichteten Gase der ersten Stufe im unterkritischen, aber flüssigen Zustand eingesetzt, wobei die Extraktionstemperaturen bevorzugt ≤ 50°C betragen.

Erfindungsgemäß wird in der ersten Stufe ein Extraktionsdruck gewählt, der bei entsprechender Extraktionstemperatur das Propan und/oder Butan im flüssigen Zustand hält, die obere Grenze von 500 bar aber nicht überschreitet. Die zur Entfettung/Entölung notwendige Menge an Extraktionsmittel hängt im wesentlichen vom Fett- bzw. Ölgehalt im zu extrahierenden Naturstoff ab. Durch das bei diesen Zustandsbedingungen hohe Lösevermögen der verwendeten Kohlenwasserstoffe, insbesondere von Propan für Fette und Öle, sind in der Regel weniger als 10 kg Propan pro kg Ausgangsmaterial ausreichend. Durch Absenkung des Druckes unter 15 x 10⁵ Pa (15 bar) kann gegen Ende der ersten Verfahrensstufe bei Temperaturen zwischen 20 und 45°C die Abscheidung des fett- und/oder ölhaltigen Extraktes erfolgen.

Bei der sich anschließenden zweiten Verfahrensstufe, der eigentlichen Aromaextraktion, wird Kohlendioxid im nahe kritischen und überkritischen Zustand eingesetzt. Verfahrensdruck, Temperatur und notwendige Gasmenge werden dabei im Rahmen der angegebenen Grenzwerte wesentlich vom Ausgangsmaterial, der verbliebenen Aromafraktion und der Zielsetzung der Extraktion bestimmt. Der Extraktionsdruck liegt bevorzugt zwischen 90 x 10⁵ Pa und 280 x 10⁵ Pa (90 und 280 bar).

Die Aromaabscheidung aus dem CO₂ kann bei Drücken zwischen 35 x 10⁵ Pa und 45 x 10⁵ Pa (35 und 45 bar) sowie Temperaturen zwischen 20 und 35°C erfolgen. Dabei hat es sich als günstig erwiesen, zur Verbesserung der Wasserlöslichkeit des Stromes dem Kohlendioxid im Extraktabscheider Lösevermittler in Form kurzkettiger Alkohole, wie Ethanol, oder komplexierende Stoffe, wie Cyclodextrine, zuzusetzen. Im zweiten Verfahrensschritt werden pro kg Ausgangsmaterial, vorzugsweise 5 bis 30 kg verdichtetes CO₂ eingesetzt.

Die Wirtschaftlichkeit des Verfahrens kann dadurch verbessert werden, daß beide Extraktionsschritte, die Entfettung bzw. Entölung mit verdichteten Kohlenwasserstoffen sowie die Aromaextraktion mit verdichtetem Kohlendioxid, verfahrenstechnisch als Kreisprozesse angelegt werden und unmittelbar nacheinander in einer Extraktionsanlage durchgeführt werden.

Die nachfolgenden Beispiele sollen die Erfindung veranschaulichen.

### Beispiel 1

### Gewinnung eines Kaffeearomas aus geröstetem Kaffee

4,7 kg frisch gemahlener Röstkaffee wurden bei 20 bar und 30°C mit insgesamt 37,6 kg flüssigem Propan extrahiert. Der Extrakt wurde nach Druckabsenkung bei 8 x 10⁵ Pa (8 bar) und 26 bis 42°C abgeschieden, wobei man 705 g eines öligen, braunen Extraktes erhielt. 3350 g des praktisch fettfreien Extraktionsrückstandes wurden anschließend bei 280 x 10⁵ Pa (280 bar) und 20°C mit 67 kg flüssigem Kohlendioxid extrahiert. Dieser Extrakt wurde durch Druckreduzierung auf 40 x 10⁵ Pa (40 bar) bei 25°C abgeschieden. Es wurden 45 g eines dunklen, pastösen Extraktes erhalten. Die Wasserlöslichkeit des Extraktes konnte verbessert werden, indem man 10 bis 50 g Ethanol v:ährend der Abscheidung des Kohlendioxid-Extraktes in den Abscheider eindosierte. Wenn anstelle von Ethanol β-Cyclodextrinpulver oder eine wäßrige Lösung davon in den Abscheider vorgelegt wurden und die Abscheidung wie beschrieben durchgeführt wurde, erhielt man ebenfalls einen vollständig wasserlöslichen Aromaextrakt.

Der durch Propan gewonnene Extrakt enthält kaum flüchtige Aromanoten. Der Kohlendioxid-Extrakt weist dagegen die für einen Röstkaffee typischen frischen Röstaroma-Noten in hoher Konzentration auf.

### Beispiel 2

### Gewinnung eines Kakaoaromas aus Kakaogranulat

250 g eines granulierten, gerösteten Kakaos mit einem Fettgehalt von 10 Gew.-% wurden bei 20 x 10⁵ Pa (20 bar) und 20°C mit 1,5 kg flüssigem Propan extrahiert, wobei eine nahezu vollständige Extraktion der Kakaobutter (25 g Extrakt) erzielt wurde (Abscheidebedingungen wie in Beispiel 1). Anschließend wurde der Extraktionsrückstand bei 270 x 10⁵ Pa (270 bar) und 30°C mit 5 kg flüssigem Kohlendioxid extrahiert, wobei im Extraktabscheider bei 40 x 10⁵ Pa (40 bar) und 30°C 1 g eines Aromakonzentrates gesammelt werden konnte.

Der Propan-Extrakt wies eine deutlich weniger intensive Aromanote auf, während der Kohlendioxid-Extrakt die für Kakao typischen und süßlich-frischen Aromanoten aufwies.

### Beispiel 3

### Gewinnung eines Aromas aus gerösteten Erdnüssen

1 kg gerösteter Erdnüsse (geschrotet) wurde bei 20 x 10⁵ Pa (20 bar) und 20°C mit 10 kg verdichtetem Propan extrahiert. Dabei wurden 450 g Erdnußöl erhalten (Abscheidebedingungen wie in Beispiel 1). Anschließend wurde der Extraktionsrückstand bei 200 x 10⁵ Pa (200 bar) und 45°C mit 15 kg verdichtetem Kohlendioxid extrahiert, wobei 8 g eines Aromaextraktes im Abscheider erhalten wurden.

Der sensorische Vergleich ergab, daß die erhaltene Ölfraktion nur schwach aromawirksam war, während der mengenmäßig kleine Kohlensäureextrakt sensorisch, d.h. sowohl geruchlich als auch geschmacklich, sehr gehaltvoll war und in hoher Konzentration die typischen Aromaverbindungen zeigte, die von gerösteten Erdnüssen erwartet werden.

## Patentansprüche

1. Verfahren zur Extraktion von natürlichen Aromen aus fett- und ölhaltigen Naturstoffen mit verdichteten Gasen,
**dadurch gekennzeichnet,**
daß man die Naturstoffe zweistufig extrahiert, wobei in der ersten Stufe flüssiges Propan und/oder Butan bei einer Temperatur ≤ 70°C und einem Druck < 500 x 10⁵ Pa (500 bar) und in der anschließenden zweiten Stufe verdichtetes Kohlendioxid bei einer Temperatur ≤ 50°C und Drücken zwischen 70 x 10⁵ Pa und 500 x 10⁵ Pa (70 und 500 bar) als Extraktionsmittel eingesetzt werden.

2. Verfahren nach Anspruch 1,
**dadurch gekennzeichnet,**
daß die Temperatur in der ersten Stufe ≤ 50°C beträgt.

3. Verfahren nach Anspruch 1 oder 2,
**dadurch gekennzeichnet,**
daß man die Extraktabscheidung in der ersten Stufe bei Drücken ≤ 15 x 10⁵ Pa (15 bar) und bei Temperaturen zwischen 20 und 45°C durchführt.

4. Verfahren nach einem der Ansprüche 1 bis 3,
**dadurch gekennzeichnet,**
daß man das Kohlendioxid im nahe kritischen bis überkritischen Zustand einsetzt.

5. Verfahren nach einem der Ansprüche 1 bis 4,
**dadurch gekennzeichnet,**
daß der Druck in der zweiten Stufe zwischen 90 x 10⁵ Pa und 280 x 10⁵ Pa (90 und 280 bar) liegt.

6. Verfahren nach einem der Ansprüche 1 bis 5,
**dadurch gekennzeichnet,**
daß man die Aromaabscheidung aus dem CO₂ in der zweiten Stufe bei Drücken zwischen 35 x 10⁵ Pa und 45 x 10⁵ Pa (35 und 45 bar) und bei Temperaturen zwischen 20 und 35°C durchführt.

7. Verfahren nach einem der Ansprüche 1 bis 6,
**dadurch gekennzeichnet,**
daß in Stufe 2 pro kg Ausgangsmaterial ≤ 30 kg an Extraktionsmittel eingesetzt werden.

8. Verfahren nach einem der Ansprüche 1 bis 7,
**dadurch gekennzeichnet,**
daß in der zweiten Stufe zusätzlich Lösevermittler auf der Basis von kurzkettigen Alkoholen oder komplexierende Stoffe eingesetzt werden.

9. Verfahren nach Anspruch 8,
**dadurch gekennzeichnet,**
daß man als Lösevermittler Ethanol verwendet.

10. Verfahren nach Anspruch 8,
**dadurch gekennzeichnet,**
daß man als komplexierende Stoffe Cyclodextrine einsetzt.

11. Verfahren nach einem der vorhergehenden Ansprüche,
**dadurch gekennzeichnet,**
daß man beide Stufen unmittelbar nacheinander durchführt und als Kreisprozesse anlegt.

12. Verfahren nach einem der vorhergehenden Ansprüche,
**dadurch gekennzeichnet,**
daß man Kaffee, Kakao, Erdnüsse oder Kokos extrahiert.

## Revendications

1. Procédé pour l'extraction d'arômes naturels à partir de substances naturelles contenant des matières grasses et de l'huile avec des gaz comprimés, caractérisé en ce que l'on extrait les substances naturelles en deux étapes, moyennant quoi dans la première étape on met en oeuvre du butane et/ou propane liquide à une température ≤ 70°C et une pression < 500 x 10⁵ Pa (500 bars), et dans la seconde étape consécutive du dioxyde de carbone comprimé à une température ≤ 70°C et compression entre 70x10⁵ Pa et 500x10⁵ Pa (70 et 500 bars) comme moyens d'extraction.

2. Procédé selon la revendication 1, caractérisé en ce que la température dans la première étape est restée ≤ 50°C.

3. Procédé selon la revendication 1 ou 2, caractérisé en ce que l'on effectue la séparation par extraction dans la première étape à des pression ≤ 15x10⁵ Pa (15 bars) et à des températures entre 20 et 45°C.

4. Procédé selon l'une des revendications 1 à 3, caractérisé en ce que l'on met en oeuvre du dioxyde de carbone dans un état proche de l'état critique jusqu'à surcritique.

5. Procédé selon l'une des revendications 1 à 4, caractérisé en ce que la pression dans la seconde étape se situe entre 90x10⁵ Pa et 280 10⁵ Pa (90 et 280 bars).

6. Procédé selon l'une des revendications 1 à 5, caractérisé en ce que l'on effectue la séparation aromatique à partir du CO₂ quand la seconde étape a des pressions entre 35x10⁵ Pa et 45x10⁵ Pa (35 et 45 bars) à des températures entre 20 et 35°C.

7. Procédé selon l'une des revendications 1 à 6, caractérisé en ce que dans l'étape 2, par kg de matériau de départ on utilise ≤ 30 kg de moyens d'extraction.

8. Procédé selon l'une des revendications 1 à 7, caractérisé en ce que dans la seconde étape on utilise à titre supplémentaire un agent de solubilisation à base d'alcool à chaîne courte ou des substances complexantes.

9. Procédé selon la revendication 8, caractérisé en ce qu'en tant qu'agent de solubilisation on utilise l'éthanol.

10. Procédé selon la revendication 8, caractérisé en ce qu'en tant que substance complexante on utilise la cyclodextrine.

11. Procédé selon l'une des revendications précédentes, caractérisé en ce que l'on effectue les deux étapes immédiatement l'une derrière l'autre et comme procédé circulaire.

12. Procédé selon l'une des revendications précédentes, caractérisé en ce que l'on extrait du café, du cacao, des cacahuètes ou coco.

## Claims

1. Process for the extraction of natural aromas from natural substances containing fat and oil using compressed gases,
**wherein**
the natural substances are extracted in two steps in which in the first step liquid propane and/or butane at a temperature of ≤ 70°C and a pressure of ≤ 500 x 10⁵ Pa and in the subsequent second step compressed carbon dioxide at a temperature of ≤ 50°C and pressures between 70 x 10⁵ Pa and 500 x 10⁵ Pa are used as extracting agents.

2. Process as claimed in claim 1,
**wherein**
the temperature in the first step is ≤ 50°C.

3. Process as claimed in one of the claims 1 or 2,
**wherein**
the extract separation in the first step is carried out at pressures of ≤ 15 x 10⁵ Pa and at temperatures between 20 and 45°C.

4. Process as claimed in one of the claims 1 to 3,
**wherein**
the carbon dioxide is used in a near critical to supercritical state.

5. Process as claimed in one of the claims 1 to 4,
**wherein**
the pressure in the second step is between 90 x 10⁵ Pa and 280 x 10⁵ Pa.

6. Process as claimed in one of the claims 1 to 5,
**wherein**
the aroma separation from the CO₂ in the second step is carried out at pressures between 35 x 10⁵ Pa and 45 x 10⁵ Pa and at temperatures between 20 and 35°C.

7. Process as claimed in one of the claims 1 to 6,
**wherein**
≤ 30 kg extracting agent is used per kg starting material in step 2.

8. Process as claimed in one of the claims 1 to 7,
**wherein**
solubilizers based on short-chain alcohols or complexing agents are additionally used in the second step.

9. Process as claimed in claim 8,
**wherein**
ethanol is used as the solubilizer.

10. Process as claimed in claim 8,
**wherein**
cyclodextrins are used as the complexing agents.

11. Process as claimed in one of the previous claims,
**wherein**
both steps are carried out immediately in succession and as cyclic processes.

12. Process as claimed in one of the previous claims,
**wherein**
coffee, cocoa, peanuts or coconut are extracted.
